# FASCICULE DE BREVET EUROPEEN

(11) **EP 0 391 782 B1**
(45) Date de publication et mention de la délivrance du brevet: **21.09.1994**
(21) Numéro de dépôt: 90400896.8
(22) Date de dépôt: 02.04.1990
(51) Int. Cl.: G01K 11/06, F25D 29/00

(54) **Dispositif de détection de franchissement d'un seuil de température**
Detektionseinrichtung für die Überschreitung eines Temperaturwertes
Device to detect the crossing of a temperature-level

(30) Priorité: 03.04.1989 FR 8904374
(43) Date de publication de la demande: 10.10.1990
(73) Titulaire: Toupin, Joseph François, F-72300 Sablé sur Sarthe (FR); DOUESNEL, Xavier, F-75016 Paris (FR)
(72) Inventeur: Toupin, Joseph François, F-72300 Sable Sur Sarthe (FR); Douesnel, Xavier, F-75016 Paris (FR)
(74) Mandataire: Poulin, Gérard

(56) Documents cités:
- WO-A-87/07373
- GB-A- 1 159 437
- US-A- 4 036 166
- ENGINEERING, vol. 226, no. 9, septembre 1986, page 595, Londres, GB; "Movingmagnet shows temperature changes"

## Description

La présente invention a tout d'abord pour objectif un procédé de détection de franchissement d'un seuil de température auquel un solide, un liquide ou un gaz est susceptible d'avoir été soumis.

Il existe de nombreux moyens de détection de franchissement d'un seuil de température ; on connaît notamment des systèmes dont le principe de fonctionnement est basé sur la dilatation d'un solide, d'un liquide ou d'un gaz qui, en fonction de la température à laquelle il est soumis, présente des caractéristiques volumiques ou dimensionnelles variables.

Il existe aussi d'autres systèmes dont le principe de fonctionnement est basé sur la propriété que possèdent certains alliages métalliques qui, formés à une température déterminée puis soumis à une température différente, ne sont susceptibles de retrouver leur forme initiale que lorsqu'ils sont à nouveau soumis à la température à laquelle ils ont été formés. Ce phénomène physique est connu sous la dénomination de "matériaux à mémoire de forme".

Les systèmes précédents sont illustrés, notamment, par le document Engineering, vol. 226, n° 9, septembre 1986, page 595, Londres, GB ; "Moving magnet shows temperature change".

Il existe encore des détecteurs de franchissement d'un seuil de température se présentant en général sous la forme de pastilles ou de bâtonnets dont la couleur change en cas de dépassement de la température pour laquelle ils ont été réglés, cette variation de couleur ayant pour origine soit une réaction enzymatique, soit la fusion d'un matériau à changement de phase "solide-liquide" qui en phase liquide se déplace par capillarité à l'intérieur d'un support comparable à un papier buvard.

Il existe enfin (FR-A-2 599 144 au nom des demandeurs) un autre moyen ou système dit "détecteur de rupture de la chaîne de froid" dont le principe de fonctionnement utilise conjointement la propriété des matériaux à changement de phase et l'application d'une force d'origine purement magnétique à un mobile coloré à l'intérieur d'un tube partiellement transparent. Le déplacement du mobile coloré n'est possible que lorsque la fusion du matériau à changement de phase libère ledit mobile et lui permet par déplacement d'apparaître devant une fenêtre transparente du tube au travers de laquelle il devient visible.

Dans le document GB-A-1 159 437, le déplacement d'un aimant résultant du changement de phase d'un matériau est utilisé pour fermer le circuit électrique d'une alarme.

Le document Engineering déjà cité, ainsi que le document US-A-4 036 166 envisagent aussi de détecter le franchissement d'un seuil de température au moyen d'un matériau fusible. La fusion de ce matériau provoque la variation d'un flux magnétique ou le déplacement d'un indicateur.

Les détecteurs de franchissement d'un seuil de température se présentant sous formes de pastilles ou de bâtonnets ne fournissent qu'une indication optique, ils ne sont susceptibles de remplir que cette fonction et n'ont été cités que pour mémoire.

Les détecteurs faisant appel à la loi de dilatation des corps se trouvent contraints à fonctionner suivant une courbe de forme linéaire en général, ce qui se traduit, pour des écarts de température non négligeables, par des variations très faibles de la valeur du paramètre utilisé comme référence (longueur, volume ou mémoire de forme des matériaux).

Les détecteurs utilisant un matériau à mémoire de forme ou à changement de phase permettent, par exemple par la libération d'un ressort, des déplacements relativement importants d'un organe mobile pour une faible variation de température, mais, comme d'ailleurs les détecteurs mentionnés plus haut, ils sont très difficilement réutilisables après que le seuil a été franchi une fois.

Le problème auquel l'invention apporte une solution est de fournir un détecteur de franchissement de seuil de température qui soit réutilisable, et plus précisément qui puisse revenir à la situation initiale à condition que :
a) la température ait franchi le seuil en sens inverse, c'est-à-dire soit revenue au voisinage de sa valeur initiale, et que
b) on procède à une opération volontaire spécifique, qui peut être l'actionnement d'une clef.

Le détecteur de l'invention doit émettre un signal d'alarme dès que le seuil a été franchi, et tant que les deux conditions ci-dessus ne sont pas remplies simultanément.

Par signal d'alarme, on entend ici non seulement un signal optique, sonore ou électrique, mais aussi le signal constitué par le déplacement mécanique d'une pièce constituant, par exemple, un pène s'opposant à l'ouverture d'une porte sans une manoeuvre spéciale.

Pour obtenir ce résultat, l'invention fournit un dispositif de détection de franchissement d'un seuil de température défini dans la revendication 1 annexée, dont le préambule s'appuie sur le document FR-A-2 599 144.

Avantageusement, la pièce de commande d'alarme et le carter comportent des moyens de verrouillage complémentaires apte à maintenir la pièce de commande d'alarme dans sa position normale armée, sous l'action de la première force magnétique, lorsque le premier élément magnétique occupe sa position normale ; des moyens élastiques agissant sur la pièce de commande d'alarme à l'encontre de la première force magnétique, pour libérer les moyens de verrouillage complémentaires lors d'une réduction de cette première force magnétique due à un déplacement du premier élément magnétique (5,40) dans sa position déclenchée.

De préférence, la première force magnétique est une force de répulsion. En effet, dans ce cas, le déplacement du premier élément magnétique vers la seconde position se fait avec une force initialement intense, qui décroit ensuite, ce qui produit un effet de déclenchement qu'on ne peut observer avec des forces d'attraction, qui conduisent à un démarrage lent, donc moins précis.

Suivant une modalité particulièrement intéressante, le dispositif comprend de plus un pène mobile entre une position normale et une position de blocage d'une porte, un déplacement de la pièce de commande d'alarme dans sa position d'alarme amenant le pène dans sa position de blocage et un déplacement du pène dans sa position normale ramenant la pièce de commande d'alarme dans sa position normale.

En effet, un simple signal optique, tel que l'apparition d'un voyant peut échapper soit par mauvaise visibilité, soit par inattention, alors qu'une impossibilité d'ouverture de porte ou de couvercle ne peut passer inaperçue. La sécurité peut même être encore augmentée s'il est nécessaire, dans ce cas, d'aller chercher une clef dans un local de surveillance pour ouvrir la porte.

Bien entendu, le dispositif de l'invention peut être utilisé avec d'autres types de moyens d'alarme, séparés ou combinés entre eux, en incluant parmi ces moyens d'alarme, notamment, les moyens commandant la mise en route d'une alimentation électrique de secours.

Suivant un premier mode de réalisation, le premier élément magnétique est mobile en translation seulement selon un axe de la chambre et comporte un pôle magnétique, sur une face du premier élément magnétique perpendiculaire audit axe, la pièce de commande d'alarme pouvant se déplacer parallèlement audit axe et perpendiculairement audit axe, et le deuxième élément magnétique comprenant deux pôles magnétiques, de signes opposés, sur une face de la pièce de commande d'alarme perpendiculaire audit axe, l'un de ces deux pôles magnétiques étant situé dans le prolongement dudit axe lorsque la pièce de commande d'alarme occupe sa position normale et l'autre de ces pôles magnétiques étant situé dans le prolongement dudit axe lorsque la pièce de commande d'alarme occupe sa position d'alarme.

Suivant un autre mode de réalisation, le premier élément magnétique est mobile en translation seulement selon un axe de la chambre et comprend une paire de pôles magnétiques de signes opposés, sur une face de ce premier élément magnétique perpendiculaire audit axe, la pièce de commande d'alarme pouvant se déplacer en translation selon ledit axe et tourner autour dudit axe, et le deuxième élément magnétique comprenant une paire de pôles de signes opposés, sur une face de la pièce de commande d'alarme tournée vers ladite face du premier élément magnétique, une rotation de 180° de la pièce de commande d'alarme amenant en vis-à-vis les pôles de même signe des deux éléments magnétiques, ou les pôles de signes opposés.

Notons encore que les matériaux utilisés pour immobiliser la première pièce peuvent être du type à "Fusion franche", tel que l'eau solidifiée, mais aussi être du type "Fusion pâteuse" tel que les graisses animales ou végétales, certains acides organiques, et certains mélanges aqueux comprenant par exemple des dérivés d'hydrocarbure, tel le glycol. Ce type de fusion pâteuse présente des caractéristiques intéressantes de blocage en phase solide, et de freinage en phase pâteuse qui peuvent, dans le procédé de l'invention, permettre des réglages de l'inertie de fonctionnement du détecteur.

D'autres caractéristiques et avantages de l'invention ressortiront plus clairement de la description qui va suivre et des dessins annexés.
- Les figures 1 et 2 représentent en coupe longitudinale les deux positions possibles des pièces du dispositif, respectivement en position "ARME" et "DECLENCHE", avec action sur le verrouillage d'une porte de congélateur.
- Les figures 3 et 4 représentent une variante de réalisation du dispositif en position "ARME", respectivement en coupe longitudinale et vue de face avec coupe partielle.
- La figure 5 représente une deuxième variante du dispositif de l'invention en position "ARME" en coupe longitudinale.
- La figure 6 montre, en coupe partielle, le dispositif de la figure 5 en position "DECLENCHE".
- Les figures 7 et 8 montrent des détails, respectivement en vue de face et en demi-coupe selon la ligne VIII-VIII, du dispositif de la figure 5.
- Les figures 9 et 10 représentent le détail d'un dispositif de verrouillage d'une porte de congélateur avec transmission du mouvement par gaine flexible.
- Les figures 11 et 12 représentent un témoin magnétique d'alarme utilisant les forces de répulsion de deux élément magnétiques anisotropes.
- Les figures 13 à 15 sont des schémas illustrant le fonctionnement du dispositif de la figure 5.

Sur les dessins, les pièces similaires portent les mêmes repères.

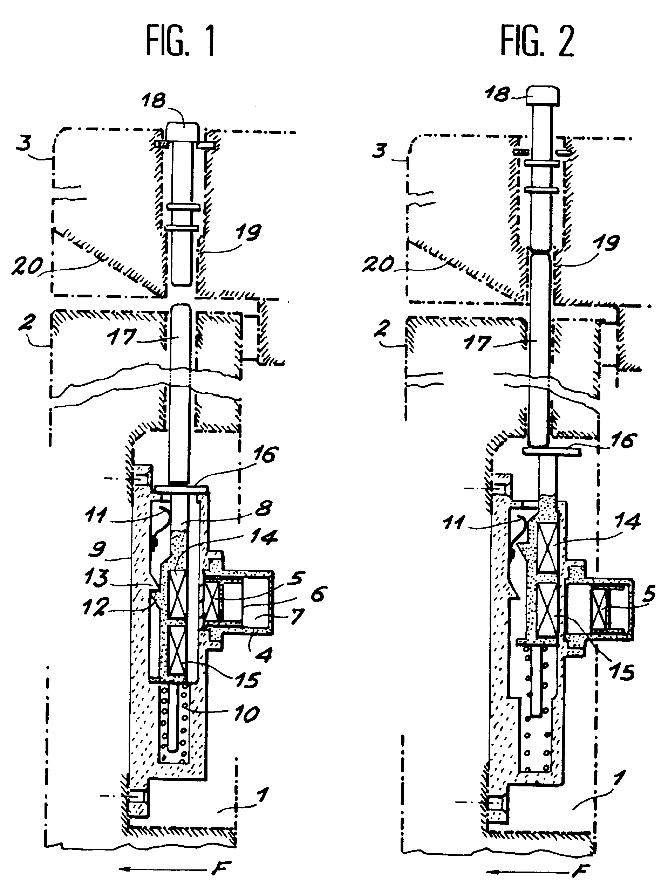

Les détecteurs, placés en applique à l'intérieur d'une cavité 1 de la porte 2 d'un congélateur, viennent agir sur un système d'alarme solidaire du tableau de contrôle 3 situé au-dessus de la porte dont une flèche F indique le sens d'ouverture. Le détecteur représenté par les figures 1 et 2 comprend un tube 4 cylindrique obturé à ses deux extrémités et étanche, à l'intérieur duquel est susceptible de se déplacer sur toute sa longueur et suivant son axe un aimant permanent anisotrope 5 serti à l'intérieur d'une jupe cylindrique tubulaire 6.

L'ensemble ainsi conçu constitue un système "piston-cylindre" contenant une substance fusible 7 au sein de laquelle peut se déplacer grâce à un certain jeu l'aimant 5 avec sa jupe, représentant le piston.

Perpendiculairement à l'axe du tube 4 est susceptible de se déplacer, avec un certain jeu, une pièce de commande d'alarme coulissante 8 guidée par un carter fixe 9. Cette pièce coulissante est sollicitée par deux forces perpendiculaires, l'une développée par un ressort 10 tend à son déplacement vers le haut dans le sens longitudinal, c'est-à-dire perpendiculaire à l'axe du tube 4 ; l'autre développée par un ressort 11 tend à son déplacement vers le tube 4, dans le sens latéral, c'est-à-dire parallèle à l'axe du tube 4.

Sur les figures, les ressorts 10 et 11 sont représentés comme un ressort à boudin ou un ressort à lame. Bien entendu, ces ressorts, comme ceux qui sont mentionnés dans la suite, peuvent être des ressorts magnétiques.

La pièce de commande d'alarme 8 comporte une dent en biseau 12 sur une face latérale susceptible de venir en appui sur une dent 13, identique mais inversée, solidaire du carter fixe 9.

L'ensemble constitue un système de cliquets interdisant le déplacement, sous l'action du ressort 10, de la pièce mobile de commande d'alarme 8, lorsque le détecteur est en position "ARME" (Fig. 1).

La pièce mobile de commande d'alarme 8 comporte, montés et collés dans deux cavités circulaires situées dans l'axe longitudinal de ladite pièce mais décalés l'un par rapport à l'autre, deux aimants permanents anisotropes à champ axial 14 et 15.

L'aimant 14 est positionné de telle manière qu'il vienne, lorsque le détecteur est en position "ARME" (Fig. 1), se placer exactement dans l'axe de l'aimant permanent 5 situé à l'intérieur du tube 4, la polarité des faces se faisant vis-à-vis de ces deux éléments magnétiques étant de mêmes signes.

L'aimant 15 est positionné de telle manière, qu'il vienne, lorsque le détecteur se trouve en position "DECLENCHE", (Fig. 2) se placer exactement dans l'axe de l'aimant permanent 5 situé à l'intérieur du tube 4, la polarité des faces se faisant vis-à-vis de ces deux éléments magnétiques étant de signes contraires.

Les aimants 14 et 15 peuvent être remplacés par un aimant unique, en U, dont les deux pôles occupent la place des aimants 14 et 15.

La pièce coulissante constituant la pièce mobile de commande d'alarme 8 comporte, à l'extrémité opposée au ressort 10, un bossage plan 16 sur lequel vient prendre appui par gravité une tige de commande coulissante 17 traversant la matière isolante de la porte 2 du congélateur pour s'arrêter à la partie supérieure de celle-ci.

Sur le tableau de contrôle 3 du congélateur et dans le même axe de coulissement que la tige 17 est monté un témoin d'alarme 18, lui-même coulissant à l'intérieur d'un tube fixe 19 traversant le tableau de contrôle 3.

Ce système de pièces coulissantes, l'une 17 assurant une fonction de transmission, l'autre 18 assurant une fonction de réception est calculé de telle manière qu'aucun contact ne soit possible entre l'extrémité de la tige 17 et l'extrémité du témoin d'alarme 18 lui faisant vis-à-vis, lorsque le détecteur se trouve dans la position "ARME" (Fig. 1).

La figure 2 illustre la position des différentes pièces en position "DECLENCHÉ" du détecteur, où on obtient d'une part le verrouillage de la porte 2 par pénétration de la tige de commande 17 dans le tube 19 solidaire du tableau de contrôle, et d'autre part, par le même mouvement de translation, l'apparition du témoin d'alarme 18.

Pour obtenir le déverrouillage de la porte, il suffit, par action manuelle de pression sur le témoin 18, de le replacer momentanément dans la position représentée par la Figure 1 en actionnant simultanément la porte. Il convient de noter que, lorsque la porte est ouverte, la tige de commande 17 est à nouveau repoussée par le ressort 10, lequel ressort est comprimé par l'action d'une rampe 20 solidaire du tableau de contrôle 3 et sur laquelle l'extrémité de la tige de commande 17 vient prendre appui au cours de l'action de fermeture de la porte.

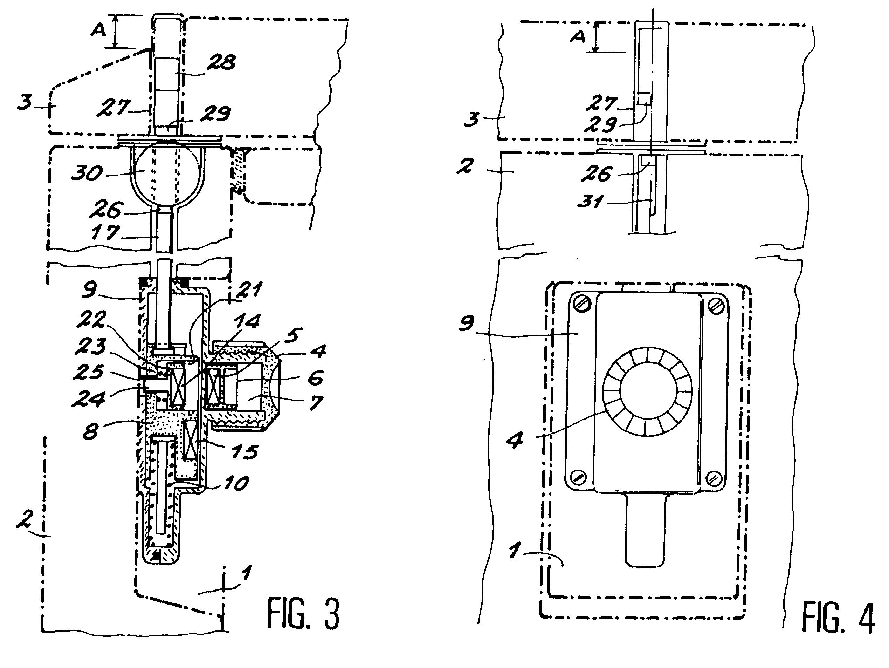

Les figures 3 et 4 représentent, en élévation et coupe longitudinale, une variante de réalisation du détecteur. Son positionnement en applique ainsi que sa structure générale sont inchangés.

Il diffère de celui des figures 1 et 2 par la structure de la pièce de commande d'alarme 8 à l'intérieur de laquelle est pratiqué un alésage 21 d'axe parallèle à l'axe du tube 4, permettant à une pièce cylindrique 22 entourant l'aimant 14 de coulisser vers le tube 4 sous l'action d'un ressort 23 prenant appui au fond de l'alésage 21 et en sens opposé sous l'action de l'aimant 5 situé dans le même axe lorsque la pièce de commande d'alarme se trouve en position "ARMÉ".

Dans cette position, l'extrémité 24 de la pièce cylindrique 22 pénètre avec un léger jeu dans un trou 25 pratiqué dans le carter 9, l'axe du trou étant alors situé exactement dans l'axe de ladite pièce.

Le système décrit ci-dessus assure le verrouillage du détecteur en position "ARMÉ" et se substitue au système de cliquets illustré par la précédente description des figures 1 et 2.

Ce mode de réalisation diffère aussi de celui des figures 1 et 2 par le fait que la tige de commande 17 porte à son extrémité un aimant permanent 26 cylindrique, orienté selon l'axe de la tige et qui vient en fin de translation, c'est-à-dire détecteur en position "DECLENCHÉ" occuper la position haute illustrée par la figure 4, c'est-à-qu'elle ne s'oppose pas alors à l'ouverture de la porte.

Sur le même axe et à l'intérieur du tableau de contrôle est positionné le témoin d'alarme optique. Ce témoin d'alarme optique se compose d'un tube fixe 27 dont l'extrémité supérieure au moins est transparente sur une hauteur A et à l'intérieur de laquelle coulisse librement un tube léger 28 portant à sa partie supérieure un anneau de couleur fluorescente ; à la partie inférieure dudit tube 28 est emmanché un aimant permanent anisotrope à champ axial 29.

Les deux aimants cylindriques à champ axial 26 et 29 sont montée de telle manière que les faces se faisant vis-à-vis soient de même polarité et que leur position respective à entrefer minimum se traduise, par interéaction des deux aimants entre eux, en une force de répulsion repoussant vers le haut le tube léger 28 et permettant à l'anneau fluorescent d'apparaître sur toute la hauteur A de la partie transparente du tube fixe 25.

En cas de déclenchement du détecteur, le réarmement peut être réalisé au moyen d'une pièce de monnaie 30 par exemple, que l'on introduit dans une fente 31 formée dans la porte 2, dans le prolongement de la tige 17, pour comprimer, par action manuelle, le ressort 10. La pièce de commande d'alarme 8 ne conserve la position "ARMÉ" qu'à la condition que la température du congélateur soit redevenue correcte, c'est-à-dire que la substance 7 dans le tube 4 soit repassée à l'état solide.

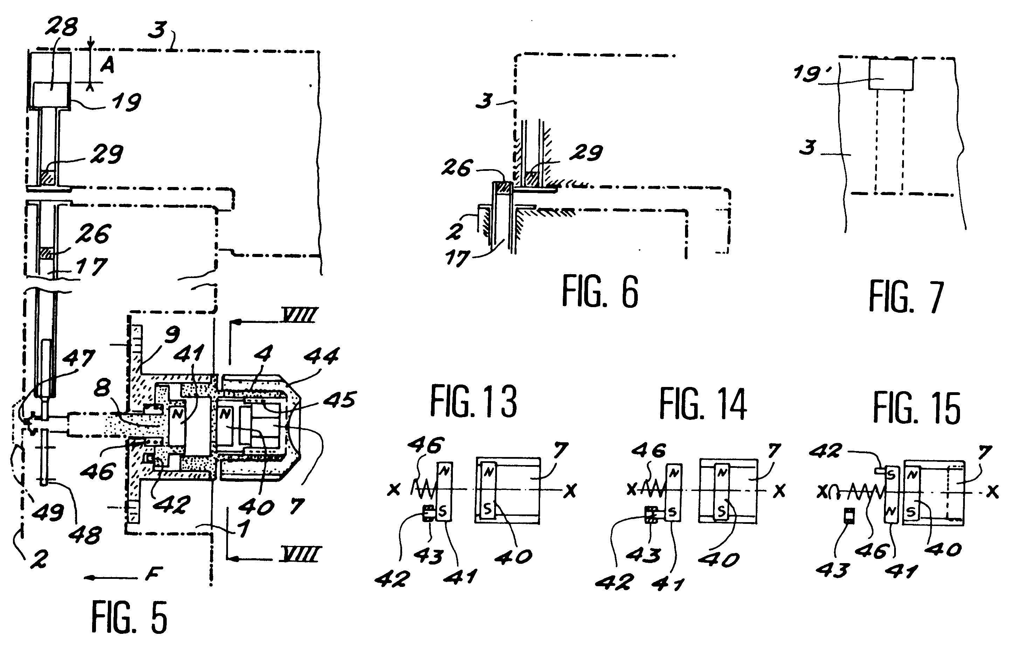

La variante représentée par les figures 5 à 8 illustre un détecteur basé sur un principe de fonctionnement identique aux deux autres modes de réalisation décrits précédemment mais dans lequel on utilise pour développer les forces d'attraction et de répulsion des aimants permanents bipolaires, qui se présentent sous forme de pastilles à orientation de champ axial.

Cette particularité permettant d'obtenir, non plus un mouvement de coulissement de la pièce mobile de commande d'alarme mais un mouvement de rotation de celle-ci de 180°, mouvement assuré par le couple développé lorsque les deux aimants se faisant vis à vis et situés dans le même axe présentent face à face des secteurs de même polarité.

Les schémas des figures 13 à 15 expliquent les différentes phases de fonctionnement :
- La figure 13 montre la situation correspondant au détecteur en position "ARME", les aimants bipolaires 40, 41 montés sur un même axe développent entre eux une force de répulsion; le seul mouvement possible pour l'aimant 40 qui constitue la "première pièce" évoquée plus haut est un mouvement de translation suivant l'axe X-X ; la substance fusible solidifiée 7 immobilise dans la position indiquée l'aimant 40, malgré la force de répulsion développée par l'aimant 41, dans la "première position" évoquée plus haut.
- La figure 14 illustre la phase correspondant au début de fusion de la substance 7, laquelle libère progressivement l'aimant 40 qui permet à la pièce mobile de commande d'alarme 8 portant l'aimant 41 de se déplacer vers la droite sous l'action d'un ressort 46, suivant l'axe X-X, pour atteindre la "seconde position".
- La figure 15 illustre la phase de déclenchement du détecteur : La fusion se poursuivant, un ergot d'immobilisation 42 solidaire de la pièce mobile de commande d'alarme 8 se libère d'une cavité fixe 43, et permet à l'énergie potentielle accumulée par l'interaction des deux aimants de se transformer en énergie cinétique laquelle assure le couple de rotation non seulement de l'aimant 41, mais de toute la pièce mobile de commande d'alarme 8.

Dans cette position, les deux aimants permanents bipolaires ont leurs secteurs de polarités contraires se faisant cette fois vis à vis, ce qui se traduit par une force d'attraction magnétique sur l'aimant 40 qui correspond à une translation de celui-ci pour le faire revenir à sa "première position", donc à un positionnement correct pour une nouvelle solidification de la substance fusible.

La figure 5 concrétise la réalisation de la variante schématisée par les figures 13 à 15.

Le détecteur comporte un tube cylindrique 4 fermé aux extrémités, muni extérieurement d'ailettes 44, et à l'intérieur duquel est susceptible de se déplacer axialement l'aimant permanent anisotrope bipolaire 40, entouré d'une jupe solidaire de deux clavettes 45 coulissant dans deux rainures usinées à l'intérieur du tube ailetté. Ce type de montage de l'ensemble mobile constitué par l'aimant permanent 40 et la jupe portant les clavettes 45 lui interdit tout mouvement de rotation mais permet un déplacement en translation sur toute la longueur et dans l'axe du tube 4.

Situé dans le même axe que le tube 4, la pièce mobile de commande d'alarme 8 comprend, d'une part, l'aimant bipolaire anisotrope 41 dans laquelle il est serti ou collé et, d'autre part, l'ergot d'arrêt 42 interdisant la rotation de la pièce mobile de commande d'alarme 8 par pénétration à l'intérieur d'un trou 43 pratiqué dans le carter fixe 9 monté dans la porte 2.

Pour éviter un effet de point mort, l'ergot 42 et le trou 43 sont disposés de façon que, dans la position "ARMÉ", les pôles de l'aimant 41 soient légèrement décalés par rapport à ceux de l'aimant 40. Un décalage angulaire de l'ordre de 3° environ est suffisant. Un décalage trop grand conduirait à des frottements trop importants de l'ergot 42 contre la paroi du trou 43.

Le carter 9 comporte en son centre un premier alésage formant palier et assurant le guidage de la pièce mobile de commande d'alarme, puis un deuxième alésage de plus grand diamètre au fond duquel le ressort hélicoïdal 46 vient prendre appui et développe une force tendant à libérer l'ergot 42 du trou 43 pratiqué dans le carter 9.

Le jeu axial de la pièce mobile de commande d'alarme à l'intérieur du carter 9 est légèrement supérieur à la longueur de l'ergot 42.

L'extrémité 47 de la pièce mobile de commande d'alarme 8 opposée à l'aimant 41 vient agir par l'intermédiaire d'une biellette 48 sur la tige coulissante 17 portant à son extrémité un aimant permanent anisotrope 26 susceptible d'interagir avec l'aimant 29 solidaire du témoin d'alarme optique 28; ce témoin apparaît, lors du déclenchement du détecteur, devant une fenêtre transparente 19′ (Fig. 7) ménagée à la partie supérieure du tube fixe 19 monté dans le tableau de contrôle 3.

Il convient de noter que la tige coulissante 17 dépasse de la partie supérieure de la porte du congélateur lors du déclenchement du détecteur (Fig. 6), interdisant sa fermeture. Celle-ci n'est possible que par intervention manuelle sur un bouton de commande d'armement 49 (en pointillé) ou par l'application d'une force manuelle, par exemple, qui,prenant appui sur l'extrémité de la tige coulissante 17 , repousse celle-ci, permettant la fermeture de la porte. La pièce mobile de commande d'alarme ne peut reprendre la position détecteur "ARMÉ" que dans la mesure où la température à l'intérieur du congélateur est correcte.

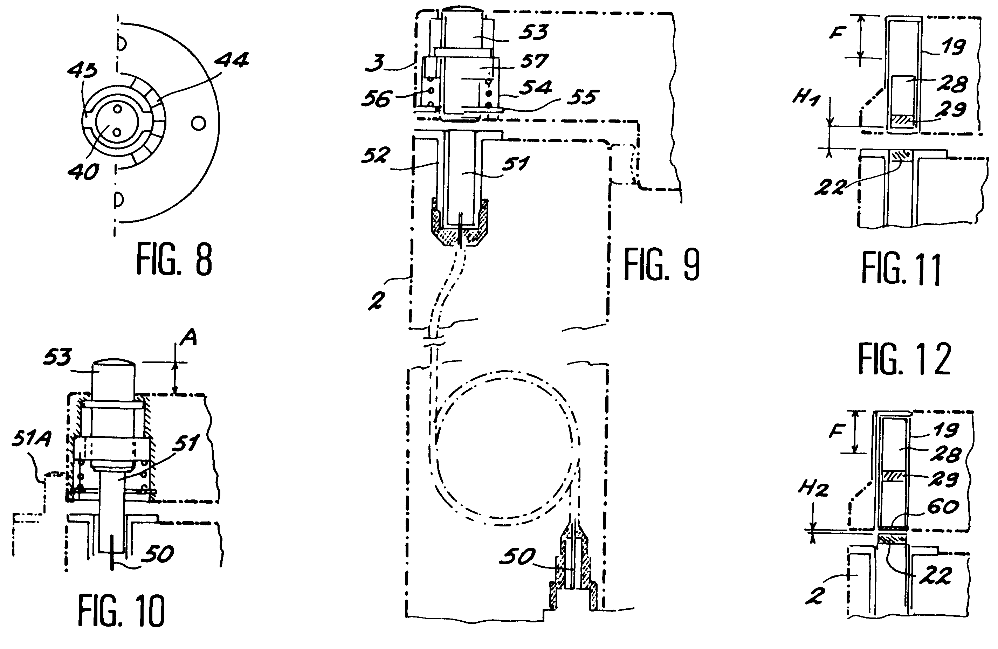

Les figures 9 à 12 représentent le détail d'un dispositif de verrouillage selon l'invention d'une porte de congélateur avec matérialisation d'un système d'alarme optique.

Le dispositif illustre la transmission d'un mouvement de translation assuré par la pièce de commande d'alarme du détecteur placé en applique à l'intérieur d'une cavité 1 de la porte 2 d'un congélateur.

Un fil souple et flexible en acier 50, rendu solidaire de la pièce de commande d'alarme du détecteur par emmanchement et collage, est susceptible de transmettre fidèlement à la pièce cylindrique 51 coulissant à l'intérieur du tube 52 un mouvement de déplacement correspondant à la valeur de son propre déplacement.

Dans le même axe que la pièce cylindrique 51 et à l'intérieur du tableau de contrôle 3 est fixé le bouton poussoir 53 de réarmement assurant également l'alarme optique et tactile.

Celui-ci se compose d'un tube 54 traversant de part en part le tableau de contrôle et solidaire de celui-ci, à l'intérieur duquel est susceptible de coulisser le bouton poussoir 53, de hauteur identique à l'épaisseur du tableau de contrôle.

A l'intérieur du tube 54 est encastré un circlips 55 sur lequel un ressort 56 vient prendre appui, lequel repousse une pièce cylindrique coulissante 57 à l'intérieur du tube 54 La pièce 57 sert de butée et détermine la position basse en effacement du bouton poussoir 53, uniquement soumis à l'action de la pesanteur lorsque le détecteur se trouve en position "ARMÉ".

Lors du "DÉCLENCHEMENT" du détecteur (Fig. 10) le fil souple et flexible en acier 50 transmet le mouvement de translation de la pièce de commande d'alarme du détecteur à la pièce cylindrique 51 laquelle, en pénétrant à l'intérieur du tube 54, vient repousser le bouton poussoir 53 et assurer simultanément le verrouillage de la porte en faisant apparaître sur une hauteur A l'extrémité du bouton poussoir 53 de couleur fluorescente.

L'ouverture de la porte 2 est assurée en appuyant manuellement sur le bouton poussoir 53 qui, repoussant la pièce cylindrique 51, efface le verrou ainsi constitué, laquelle pièce cylindrique 51 reprend , la porte étant ouverte, la position sortie indiquée en trait pointillé en 51A.

Pour la fermeture de la porte il convient d'appuyer manuellement sur la pièce 51 en assurant son déplacement d'une valeur légèrement supérieure à la hauteur A correspondant à la course d'armement.

L'armement du détecteur n'est possible que dans la mesure où la température à l'intérieur du congélateur est redevenue correcte.

Les figures 11 et 12 représentent suivant l'invention un témoin d'alarme magnétique à répulsion et attraction. Celui-ci se compose d'un tube 19 traversant le tableau de contrôle et transparent sur une hauteur F, à l'intérieur duquel est susceptible de coulisser un tube léger 28 comportant à sa partie supérieure un anneau fluorescent et à sa partie inférieure un aimant permanent 29 anisotrope emmanché à force. Ce témoin d'alarme est caractérisé par le fait qu'une pastille de fer doux 60 est fixée à la partie inférieure du tube 19 par collage, par exemple. Cette particularité permet de produire une force d'attraction immobilisant le tube léger 28 dans la position indiquée par la Figure 11 correspondant à la position détecteur "ARMÉ".

Lors du déclenchement, le déplacement de l'aimant permanent 22 modifie l'entrefer dont la valeur passe de H1 à H2. La valeur de H2 étant faible, la présence de la pastille de fer doux 60 assure une déformation brutale au champ magnétique développé par les aimants 22 et 29. Les lignes de forces se concentrant dans l'axe des aimants repoussent le tube léger 28 et assurent l'apparition de l'anneau fluorescent devant la fenêtre transparente du tube 19.

Il convient de noter que, dans l'explication précédente, le montage est réalisé de manière à ce que, lors du déclenchement, l'entrefer diminue de la valeur H1 à la valeur H2.

On peut également réaliser le montage de telle manière que, lors du déclenchement, l'entrefer augmente de la valeur H2 à la valeur H1, la valeur H2 représentant la position correspondant au détecteur armé, et la valeur H1 correspondant au détecteur déclenché. Dans ce cas, le dispositif peut être identique à celui qui a été décrit en se référant au figures 1 et 2 ou à la figure 3, le ressort 10 étant remplacé par un ressort de traction, les aimants 14 et 15 étant inversés et les emplacements des formes complémentaires de la pièce 8 et du carter fixe 9 étant modifiés afin que le blocage soit normalement obtenu dans la position haute de la pièce 8.

Lors de l'ouverture de la porte, ce montage inversé provoque le déplacement, par simple gravité, du tube léger 28, l'aimant 29 n'étant plus soumis à la force de répulsion de l'aimant 22.

De ce fait, le système acquiert la nouvelle fonction d'indicateur d'ouverture de porte. En d'autres termes, l'apparition de l'anneau fluorescent formé sur le tube léger 28, en face de la partie transparente du tube fixe 19 (alors située dans le bas de ce dernier) indique alors soit le déclenchement du dispositif de détection, soit l'ouverture de la porte.

Dans une autre variante de réalisation du témoin d'alarme magnétique, ce deux indications sont obtenues pour deux positions différentes du tube léger 28. La pastille de fer doux 60 est alors remplacée par une butée mécanique.

Sous l'effet de répulsion des aimants 22 et 29, ce tube 28 occupe la position haute illustrée sur la figure 12 lorsque le détecteur est armé et la porte fermée. Une indication de cet état, portée sur le tube 28, apparaît alors devant la fenêtre transparente formée dans le tube fixe 19.

Lors d'un déclenchement du détecteur, l'aimant 29 descend de quelques millimètres, ce qui provoque une descente comparable du tube léger 28. Une indication de cet état, également portée sur le tube 28, apparaît alors devant la fenêtre formée dans le tube fixe 19.

Enfin, l'ouverture de la porte 2 a pour effet de supprimer l'alignement des aimants 22 et 29, de sorte que le tube léger 28 descend par gravité jusqu'à une position basse, située quelques millimètres en dessous de la position de déclenchement. Une troisième indication portée sur le tube 28 apparaît alors devant la fenêtre formée dans le tube fixe 10.

Dans ce dernier mode de réalisation, il est à noter que la course totale de l'aimant 29, qui détermine la course du tube léger 28 entre sa position haute (porte fermée, température inférieure au seuil de déclenchement) et sa position intermédiaire (porte fermée, température supérieure au seuil de déclenchement) doit par construction être relativement faible (par exemple, environ 5 mm). La course de la pièce 8 peut cependant être nettement supérieure, si l'on prend soin de limiter le déplacement vers le bas, par gravité, de la tige 17 portant l'aimant 26, au moyen d'une butée formée dans le carter fixe 9.

Les dispositifs décrits peuvent trouver des applications diverses, en dehors de la surveillance d'une chambre froide. On peut citer le détecteur de surchauffe d'un four ou d'une chaudière. Le dispositif peut aussi servir à détecter le franchissement d'un seuil de température dans le sens descendant. Dans ce cas, par exemple, un appareillage auxiliaire tente périodiquement de faire passer le dispositif en position "ARMÉ" à partir de la position "DECLENCHÉ" et le fait d'y parvenir déclenche l'alarme.

## Revendications

1. Dispositif de détection de franchissement d'un seuil de température, comprenant :
- une chambre fermée (4) contenant un matériau qui est à l'état solide lorsque la température est inférieure audit seuil et à l'état liquide lorsque la température est supérieure audit seuil ;
- un premier élément magnétique (5,40) logé dans la chambre (4) et mobile dans cette chambre entre une première position normale et une deuxième position déclenchée, lorsque le matériau est à l'état liquide ;
- une pièce de commande d'alarme (8) placée à l'extérieur de ladite chambre (4) et comportant au moins un deuxième élément magnétique (14,15;41), une première force magnétique, tendant à déplacer le premier élément magnétique (5,40) vers sa position déclenchée, étant normalement engendrée entre le premier et le deuxième éléments magnétiques ;
caractérisé par le fait que la pièce de commande d'alarme (8) est logée dans un carter (9) lié à la chambre (4), et mobile dans ce carter (9) entre une première position normale, dans laquelle cette pièce de commande d'alarme (8) est normalement maintenue par la première force magnétique, lorsque le premier élément magnétique (5,40) occupe sa position normale, et une deuxième position d'alarme, dans laquelle le deuxième élément magnétique (14,15;41) exerce sur le premier élément magnétique (5;40) une deuxième force magnétique opposée à la première tendant à déplacer le premier élément magnétique (5;40) vers sa position normale.

2. Dispositif selon la revendication 1, caractérisé par le fait que la pièce de commande d'alarme (8) et le carter (9) comportent des moyens de verrouillage complémentaires (12,13;24,25; 42,43) apte à maintenir la pièce de commande d'alarme (8) dans sa position normale armée, sous l'action de la première force magnétique, lorsque le premier élément magnétique (5;40) occupe sa position normale ; des moyens élastiques (11,23,46) agissant sur la pièce de commande d'alarme (8) à l'encontre de la première force magnétique, pour libérer les moyens de verrouillage complémentaires lors d'une réduction de cette première force magnétique due à un déplacement du premier élément magnétique (5,40) dans sa position déclenchée.

3. Dispositif selon l'une quelconque des revendications 1 et 2, caractérisé par le fait que la première force magnétique est une force de répulsion.

4. Dispositif selon l'une quelconque des revendications 1 à 3, caractérisé par le fait qu'il comprend de plus un pène (17,51) mobile entre une position normale et une position de blocage d'une porte (2), un déplacement de la pièce de commande d'alarme (8) dans sa position d'alarme amenant le pène (17,51) dans sa position de blocage et un déplacement du pène dans sa position normale ramenant la pièce de commande d'alarme (8) dans sa position normale.

5. Dispositif selon l'une quelconque des revendications 1 à 3, caractérisé par le fait qu'il comporte un organe d'alarme optique (28) monté dans un tableau de contrôle (3) et mobile dans ce tableau, en réponse à un déplacement de la pièce de commande d'alarme (8).

6. Dispositif selon la revendication 5, caractérisé par le fait qu'un déplacement de la pièce de commande d'alarme (8) de sa position normale à sa position d'alarme commande un déplacement vers le haut de l'organe d'alarme optique (28) à l'encontre de la pesanteur.

7. Dispositif selon la revendication 5, caractérisé par le fait qu'un déplacement de la pièce de commande d'alarme (8) de sa position normale à sa position d'alarme, ainsi que l'ouverture d'une porte (2), commandent un déplacement vers le bas de l'organe d'alarme optique (28).

8. Dispositif selon la revendication 7, caractérisé par le fait qu'un déplacement de la pièce de commande d'alarme (8) de sa position normale à sa position d'alarme commande un déplacement de l'organe d'alarme optique (28) inférieur au déplacement de cet organe commandé par l'ouverture de la porte (2).

9. Dispositif selon l'une quelconque des revendications 1 à 8, caractérisé par le fait que le premier élément magnétique (5) est mobile en translation seulement selon un axe de la chambre (4) et comporte un pôle magnétique (5), sur une face du premier élément magnétique perpendiculaire audit axe, la pièce de commande d'alarme (8) pouvant se déplacer parallèlement audit axe et perpendiculairement audit axe, et le deuxième élément magnétique comprenant deux pôles magnétiques (14,15), de signes opposés, sur une face de la pièce de commande d'alarme (8) perpendiculaire audit axe, l'un (14) de ces deux pôles magnétiques étant situé dans le prolongement dudit axe lorsque la pièce de commande d'alarme (8) occupe sa position normale et l'autre (15) de ces pôles magnétiques étant situé dans le prolongement dudit axe lorsque la pièce de commande d'alarme (8) occupe sa position d'alarme.

10. Dispositif selon l'une quelconque des revendications 1 à 8, caractérisé par le fait que le premier élément magnétique (40) est mobile en translation seulement selon un axe (X-X) de la chambre (4) et comprend une paire de pôles magnétiques de signes opposés, sur une face de ce premier élément magnétique (40) perpendiculaire audit axe, la pièce de commande d'alarme (8) pouvant se déplacer en translation selon ledit axe et tourner autour dudit axe, et le deuxième élément magnétique (14,15;41) comprenant une paire de pôles de signes opposés, sur une face de la pièce de commande d'alarme (8) tournée vers ladite face du premier élément magnétique (40), une rotation de 180° de la pièce de commande d'alarme (8) amenant en vis-à-vis les pôles de même signe des deux éléments magnétiques, ou les pôles de signes opposés.

## Patentansprüche

1. Detektionseinrichtung für die Überschreitung eines Temperatur-Schwellenwerts, umfassend:
- eine geschlossene Kammer (4), ein Material enthaltend, das im festen Aggregatzustand ist, wenn die Temperatur niedriger ist als der genannte Schwellenwert und im flüssigen Aggregatzustand, wenn die Tempertur höher ist als der genannte Schwellenwert;
- ein erstes magnetisches Element (5;40), angeordnet in der Kammer (4) und beweglich in dieser Kammer zwischen einer ersten, normalen Stellung und einer zweiten, ausgelösten Stellung, wenn das Material im flüssigen Aggregatzustand ist;
- ein Alarmauslösungsteil (8), angeordnet außerhalb der genannten Kammer (4), das wenigstens ein zweites magnetisches Element (14, 15;41) umfaßt, wobei eine erste magnetische Kraft, die bestrebt ist, das erste magnetische Element (5;40) in seine ausgelöste Stellung zu verschieben, normalerweise erzeugt wird zwischen dem ersten und dem zweiten magnetischen Element;
**dadurch gekennzeichnet,**
daß das Alarmauslösungsteil (8) in einem Gehäuse (9) sitzt, verbunden mit der Kammer (4), und beweglich ist in diesem Gehäuse (9) zwischen einer ersten, normalen Stellung, in der dieses Alarmauslösungsteil (8) normalerweise festgehalten wird durch die erste magnetische Kraft, wenn das erste magnetische Element (5;40) seine Normalposition einnimmt, und einer zweiten Stellung oder Alarmstellung, in der das zweite magnetische Element (14,15;41) auf das erste magnetische Element (5;40) eine zweite magnetische Kraft ausübt, der ersten entgegengesetzt, bestrebt, das erste magnetische Element (5;40) in seine Normalposition zu verschieben.

2. Vorrichtung nach Anspruch 1, dadurch gekennzeichnet, daß das Alarmauslösungsteil (8) und das Gehäuse (9) zusätzliche Verriegelungseinrichtungen (12,13;24,25;42,43) umfassen, geeignet, das Alarmauslösungsteil (8) in seiner gespannten Normalstellung zu halten, unter der Wirkung der ersten magnetischen Kraft, wenn das erste magnetische Element (5;40) seine Normalstellung einnimmt; wobei elastische Einrichtungen (11,23,46) auf das Alarmauslösungsteil (8) wirken, gegen die erste magnetische Kraft, um die ersten zusätzlichen Verriegelungseinrichtungen frei zu machen bei einer Reduktion dieser ersten magnetischen Kraft, hervorgerufen durch eine Verschiebung des ersten magnetischen Elements (5;40) in seine ausgelöste Stellung.

3. Vorrichtung nach einem der Ansprüche 1 bis 2, dadurch gekennzeichnet, daß die erste magnetische Kraft eine Abstoßungskraft ist.

4. Vorrichtung nach einem der Ansprüche 1 bis 3, dadurch gekennzeichnet, daß sie außerdem einen Riegel (17,51) umfaßt, beweglich zwischen einer Normalposition und einer Blockierungsposition einer Tür (2), wobei eine Verschiebung des Alarmauslösungsteils (8) in seine Alarmposition den Riegel (17,51) in seine Blockierungsposition bringt und eine Verschiebung des Riegels in seine Normalposition das Alarmauslösungsteil (8) in seine Normalposition bringt.

5. Vorrichtung nach einem der Ansprüche 1 bis 3, dadurch gekennzeichnet, daß sie ein optisches Alarmorgan (28) umfaßt, angebracht in einer Kontrolltafel (3) und beweglich in dieser Tafel, als Reaktion auf eine Verschiebung des Alarmauslösungsteils (8).

6. Vorrichtung nach Anspruch 5, dadurch gekennzeichnet, daß eine Verschiebung des Alarmauslösungsteils (8) aus seiner Normalposition in seine Alarmposition eine Verschiebung des optischen Alarmorgans (28) nach oben bewirkt, gegen die Schwerkraft.

7. Vorrichtung nach Anspruch 5, dadurch gekennzeichnet, daß eine Verschiebung des Alarmauslösungsteils (8) aus seiner Normalposition in seine Alarmposition, ebenso wie die Öffnung einer Tür (2), eine Verschiebung des optischen Alarmorgans (28) nach unten bewirkt.

8. Vorrichtung nach Anspruch 7, dadurch gekennzeichnet, daß eine Verschiebung des Alarmauslösungsteils (8) aus seiner Normalposition in seine Alarmposition eine kleinere Verschiebung des optischen Alarmorgans (28) bewirkt, als die Verschiebung dieses Organs, bewirkt durch die Öffnung der Tür (2).

9. Vorrichtung nach einem der Ansprüche 1 bis 8, dadurch gekennzeichnet, daß das erste magnetische Element (5) in Längsrichtung nur beweglich ist entsprechend einer Achse der Kammer (4) und einen Magnetpol (5) aufweist auf einer zur genannten Achse senkrechten Fläche des ersten magnetischen Elements, wobei das Alarmauslösungsteil (8) sich parallel zur genannten Achse und senkrecht zur genannten Achse verschieben kann, und das zweite magnetische Element zwei Magnetpole (14,15) aufweist, mit entgegengesetzten Vorzeichen, auf einer zur genannten Achse senkrechten Fläche des Alarmauslösungsteils (8), wobei einer (14) der beiden Magnetpole sich in der Verlängerung der genannten Achse befindet, wenn das Alarmauslösungsteil (8) seine Normalstellung einnimmt, und der andere (15) dieser Magnetpole sich in der Verängerung der genannten Achse befindet, wenn das Alarmauslösungsteil (8) seine Alarmposition einnimmt.

10. Vorrichtung nach einem der Ansprüche 1 bis 8, dadurch gekennzeichnet, daß das erste magnetische Element (40) in Längsrichtung nur beweglicht ist entsprechend einer Achse (X-X) der Kammer (4) und ein Paar Magnetpole mit umgekehrten Vorzeichen aufweist, auf einer zur genannten Achse senkrechten Fläche dieses ersten magnetischen Elements (40), wobei das Alarmauslösungsteil (8) sich in Längsrichtung verschieben kann entsprechend der genannten Achse und sich um diese Achse drehen kann, und das zweite magnetische Element (14,15;41) ein Paar Pole mit umgekehrten Vorzeichen aufweist, auf einer gegen die genannte Fläche des ersten magnetischen Elements (40) gekehrten Fläche des Alarmauslösungsteils (8), wobei eine Drehung des Alarmauslösungsteils (8) um 180° die Pole gleicher Vorzeichen der beiden magnetischen Elemente in Gegenüberstellung bringt, oder die Pole entgegengesetzter Vorzeichen.

## Claims

1. Device for detecting the clearing of a temperature threshold, comprising a sealed chamber (4) containing a material which is in the solid state when the temperature is below said threshold and in the liquid state when the temperature is above said threshold; a first magnetic element (5,40) located in the chamber (4) and mobile in said chamber between a first, normal position and a second, tripped position, when the material is in the liquid state; an alarm control part (8) placed outside said chamber (4) and having at least one second magnetic element (14,15;41), a first magnetic force, tending to displace the first magnetic element (5,40) towards its tripped position, normally being produced between the first and second magnetic elements; characterized in that the alarm control part (8) is located in a casing (9) connected to the chamber (4) and movable in said casing (9) between a first, normal position, in which said alarm control part (8) is normally maintained by the first magnetic force, when the first magnetic element (5,40) occupies its normal position, and a second alarm position, in which said second magnetic element (14,15;41) exerts on the first magnetic element (5,40) a second magnetic force opposed to the first and tending to displace the first magnetic element (5,40) towards its normal position.

2. Device according to claim 1, characterized in that the alarm control part (8) and the casing (9) have complementary locking means (12,13;24,25;42,43) able to maintain the alarm control part (8) in its normal, armed position, under the action of the first magnetic force, when the first magnetic element (5,40) occupies its normal position; elastic means (11,23,46) acting on the alarm control part (8) in opposition to the first magnetic force, in order to release the complementary locking means during a reduction of said first magnetic force due to a displacement of the first magnetic element (5,40) into its tripped position.

3. Device according to either of the claims 1 and 2, characterized in that the first magnetic force is a repulsion force.

4. Device according to any one of the claims 1 to 3, characterized in that it also comprises a bolt (17,51) mobile between a normal position and a locking position of a door (2), a displacement of the alarm control part (8) into its alarm position bringing the bolt (17,51) into its locking position and a displacement of the bolt into its normal position returning the alarm control part (8) to its normal position.

5. Device according to any one of the claims 1 to 3, characterized in that it incorporates an optical alarm member (28) mounted in a control panel (3) and mobile in the latter, in response to a displacement of the alarm control part (8).

6. Device according to claim 5, characterized in that a displacement of the alarm control part (8) from its normal position to its alarm position controls an upward displacement of the optical alarm member (28) in opposition to gravity.

7. Device according to claim 5, characterized in that a displacement of the alarm control part (8) from its normal position to its alarm position, as well as the opening of a door (2), control a downward displacement of the optical alarm member (28).

8. Device according to claim 7, characterized in that a displacement of the alarm control part (8) from its normal position to its alarm position controls a displacement of the optical alarm member (28) smaller than the displacement of said member controlled by the opening of the door (2).

9. Device according to any one of the claims 1 to 8, characterized in that the first magnetic element (5) is mobile in translation only along one axis of the chamber (4) and incorporates a magnetic pole (5), on one face of the first magnetic element perpendicular to said axis, the alarm control part (8) being displaceable parallel to said axis and perpendicular to said axis, and the second magnetic element incorporating two magnetic poles (14,15) of opposite signs on one face of the alarm control part (8) perpendicular to said axis, one (14) of said two magnetic poles being located in the extension of said axis when the alarm control part (8) occupies its normal position and the other (15) of said magnetic poles being located in the extension of said axis when the alarm control part (8) occupies its alarm position.

10. Device according to any one of the claims 1 to 8, characterized in that the first magnetic element (40) is mobile in translation solely along an axis (X-X) of the chamber (4) and comprises a pair of magnetic poles having opposite signs, on one face of said first magnetic element (40) perpendicular to said axis, the alarm control part (8) being displaceable in translation along said axis and rotate about said axis, and the second magnetic element (14,15;41) having a pair of poles with opposite signs, on one face of the alarm control part (8) turned towards said face of the first magnetic element (40), a rotation by 180° of the alarm control part (8) bringing into a facing relationship the poles having the same sign of the two magnetic elements, or the poles having opposite signs.
